# DEMANDE DE BREVET EUROPEEN

(11) **EP 4 091 896 A1**
(43) Date de publication de la demande: **23.11.2022**
(21) Numéro de dépôt: 21174276.2
(22) Date de dépôt: 18.05.2021
(51) Int. Cl.: B60W 30/184, B60W 30/186, B60W 40/09, B60W 50/14

(54) **PROCEDE D'ACCOMPAGNEMENT A LA CONDUITE D'UN CONDUCTEUR POUR LIMITER L'USURE DE COMPOSANTS D'UN VEHICULE AUTOMOBILE**

(71) Demandeur: PSA Automobiles SA, 78300 Poissy (FR)
(72) Inventeur: PETIT, BENJAMIN, 92500 RUEIL MALMAISON (FR); JAINE, THIERRY, 78500 SARTROUVILLE (FR); TEIXEIRA, DANIEL, 95330 DOMONT (FR)

(57) **Abrégé**

L'invention concerne un procédé d'accompagnement à la conduite d'un conducteur de véhicule permettant de limiter l'usure de composants à protéger, comprenant les étapes successives de demande (Vc) d'accompagnement à la conduite, d'apprentissage (E40) durant laquelle des instructions de conduite sont données au conducteur pour modifier son comportement de conduite de manière à protéger ledit composant lors de son utilisation, caractérisé en ce qu'il comprend une demande de test (E45) du comportement de conduite vis-à-vis dudit composant, un enregistrement (E50) d'un historique de données relatives à l'utilisation dudit composant, un enregistrement (E60) d'un historique de données relatives à un comportement de conduite du conducteur, de vérification (E70) d'un comportement de conduite néfaste pour le composant à partir de ces historiques de données enregistrées, une attribution (E90) d'une bonification en cas de bonne utilisation dudit composant du véhicule.

## Description

La présente invention concerne de manière générale un procédé d'accompagnement à la conduite, ou de coaching de conduite, d'un véhicule automobile.

Il est connu que le comportement d'un conducteur de véhicule automobile, c'est-à-dire sa manière de conduire, influe sur l'usure de certains composants du véhicule tels qu'un système d'embrayage, une batterie électrique, des pneus, un filtre à particules, etc.. De bonnes pratiques en matière de conduite, autrement dit un comportement de conduite adapté, permettent de réduire de façon significative l'usure de ces composants.

Le document EP3106342 décrit une application pour afficher une information relative à l'accomplissement d'un objectif ou challenge, pendant la conduite du véhicule, sur un écran observable par le conducteur. L'utilisateur utilise de façon continue l'application pendant la conduite dans le but de parvenir à une certaine stabilité ou constance en matière de conduite.

Un but de la présente invention est de proposer un procédé d'accompagnement, ou de coaching, d'un conducteur de véhicule automobile permettant de corriger si besoin le comportement de conduite du conducteur de manière à préserver un ou plusieurs composants du véhicule et éviter une usure prématurée de ces composants.

Pour cela, un premier aspect de l'invention concerne un procédé d'accompagnement à la conduite d'un conducteur de véhicule automobile permettant de limiter l'usure de composants à protéger de ce véhicule, comprenant les étapes successives suivantes :
- une demande d'accompagnement à la conduite pour limiter l'usure d'un des composant à protéger du véhicule,
- une étape d'apprentissage durant laquelle des instructions de conduite sont données au conducteur pour modifier son comportement de conduite de manière à protéger ledit composant lors de son utilisation,
caractérisé en ce qu'il comprend les étapes suivantes :
- une demande de test du comportement de conduite vis-à-vis dudit composant,
- une étape d'enregistrement d'un historique de données relatives à l'utilisation dudit composant,
- une étape d'enregistrement d'un historique de données relatives à un comportement de conduite du conducteur,
- une étape de vérification d'un comportement de conduite néfaste pour le composant à partir de ces historiques de données enregistrées,
- une étape d'attribution d'une bonification en cas de bonne utilisation dudit composant du véhicule.

Grâce à l'invention, le comportement de conduite du conducteur et l'utilisation du composant sont analysés et cette analyse permet, le cas échéant, d'identifier un comportement de conduite inadapté induisant une mauvaise utilisation du composant, susceptible de provoquer une usure prématurée de celui-ci.

Selon une réalisation, lors de l'étape d'apprentissage, les instructions de conduite sont données au conducteur par un dispositif d'interface homme-machine du véhicule.

Selon une réalisation, l'étape de vérification comprend l'utilisation d'un modèle de prédiction d'usure du composant obtenu par une méthode d'apprentissage automatique.

Selon une réalisation, les étapes d'enregistrement des données pour le test sont réalisées sur une fenêtre d'observation donnée.

Selon une réalisation, la fenêtre d'observation est définie par une distance déterminée à parcourir ou par une durée déterminée d'utilisation du véhicule.

Selon une réalisation, le procédé comprend :
- une étape d'enregistrement continue de données relatives à l'utilisation des composants à protéger,
- une étape d'enregistrement continue de données relatives à un comportement de conduite du conducteur vis-à-vis des composants à protéger,
- une étape de détection d'un comportement de conduite néfaste pour un des composant à protéger à partir de ces données enregistrées,
- une étape d'avertissement du conducteur s'il est déterminé, lors de ladite étape de détection, que le comportement de conduite du conducteur est néfaste pour un des composants à protéger.
- une étape de proposition d'accompagnement à la conduite pour ce composant, préalable à l'étape de demande par le conducteur d'accompagnement à la conduite.

Selon une réalisation, le procédé comprend une étape d'avertissement du conducteur s'il est déterminé, lors de ladite étape de vérification que le comportement de conduite du conducteur est néfaste pour le composant.

Selon une réalisation, l'étape d'avertissement du conducteur renvoie ensuite à étape de proposition d'accompagnement à la conduite pour ce composant.

Selon une réalisation, les étapes d'enregistrement, de vérification et d'apprentissage sont mises en œuvre par un calculateur du véhicule ou par un calculateur d'un terminal de communication mobile connecté au véhicule.

Selon une réalisation, le procédé est mis en œuvre pour limiter l'usure d'au moins l'un des composants du groupe comportant un système d'embrayage, une batterie électrique, des pneus, un filtre à particules, un injecteur, un démarreur, un système d'amortisseurs et des plaquettes de frein.

L'invention a aussi pour objet un produit programme d'ordinateur comprenant des instructions de programme pour commander l'exécution du procédé selon l'une des variantes précédemment décrites.

L'invention a aussi pour objet un terminal de communication mobile agencé pour se connecter à un véhicule automobile et programmé pour commander l'exécution du procédé selon des variantes précédemment décrites.

L'invention a aussi pour objet un véhicule automobile comportant un calculateur programmé pour commander l'exécution du procédé selon l'une des variantes précédemment décrites.

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, sur lesquels :
- la figure unique représente un organigramme des étapes du procédé d'accompagnement à la conduite selon un mode de réalisation particulier de l'invention.

La présente invention concerne un procédé d'accompagnement à la conduite, ou de coaching de conduite, pour un conducteur d'un véhicule automobile. Il permet plus précisément de réaliser un accompagnement personnalisé du conducteur du véhicule afin de limiter l'usure d'un ou plusieurs composants du véhicule, autrement dit pour protéger ce ou ces composants.

De façon générale, le but du procédé de coaching de conduite selon l'invention est d'aider le conducteur à adopter un comportement de conduite permettant de limiter l'usure d'un ou plusieurs composants du véhicule et notamment d'éviter une usure prématurée de ces composants provoquée par un comportement de conduite inadapté. L'invention permet de protéger certains composants du véhicule, en guidant le conducteur vers un comportement de conduite adapté, et ainsi d'optimiser la durée de vie de ces composants.

L'invention peut être utilisée pour protéger les divers composants suivants : un système d'embrayage, une batterie électrique, des pneus, un filtre à particules du véhicule un injecteur, un démarreur, des plaquettes de frein, des amortisseurs, etc... Dans l'exemple de réalisation décrit ici, la présente invention permet de protéger le système d'embrayage, la batterie 12V d'alimentation du réseau électrique de bord, les pneus et le filtre à particules du véhicule.

Dans le mode de réalisation décrit ici, le procédé est mis en œuvre par un calculateur du véhicule, par exemple par le calculateur moteur.

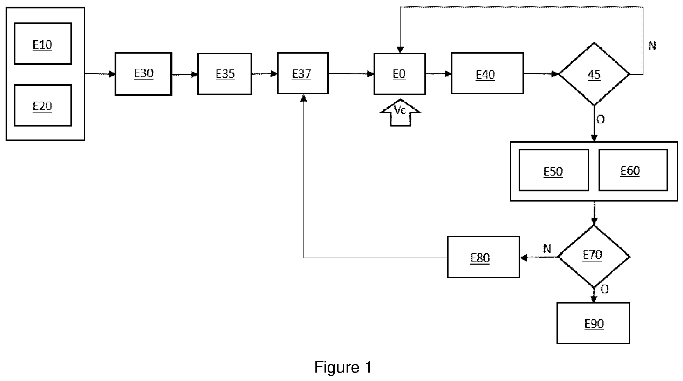

En référence à la figure 1, à l'étape E0, le coaching est proposé à l'utilisateur, à l'aide d'une interface IHM (Interface Homme-Machine) du véhicule. Par exemple, un écran tactile du véhicule affiche une commande d'activation d'un « coaching qualité », sous la forme d'une icône sélectionnable par le conducteur.

S'il le souhaite, le conducteur sélectionne, par une action volontaire, Vc, la commande « coaching qualité » pour déclencher l'exécution d'un coaching de conduite visant à protéger certains composants du véhicule.

Le procédé de coaching comprend également les étapes suivantes, mises en œuvre par le calculateur du véhicule, pour chaque composant à protéger du véhicule :
- une étape d'enregistrement E10 lors de laquelle un historique de données relatives à l'utilisation dudit composant est enregistré,
- une étape d'enregistrement E20 lors de laquelle un historique de données relatives à un comportement de conduite du conducteur est enregistré.

Les étapes d'enregistrement E10 et E20 sont concomitantes et permettent chacune d'enregistrer un historique de données. Ces enregistrements se font de préférence en continu lors du fonctionnement du véhicule. Les données enregistrées peuvent être des données de mesure issues de capteurs du véhicule ou des données calculées par un ou plusieurs calculateurs du véhicule.

Lors de l'étape d'enregistrement E10, le calculateur enregistre des données relatives à l'utilisation des composants à protéger. Ces données enregistrées sont propres au composant et permettent de caractériser son utilisation. Par exemple, dans le cas où le composant à protéger est un système d'embrayage, les données enregistrées sont relatives à la position de la pédale d'embrayage mesurée par un capteur de position de pédale. Dans le cas où le composant à protéger est une batterie, les données enregistrées sont relatives au niveau de charge de la batterie évaluée de façon connue par exemple à partir de mesures électriques aux bornes de la batterie. Dans le cas où le composant à protéger est un pneu, les données enregistrées sont relatives à une pression de gonflage du pneu et à une épaisseur de la gomme intérieure du pneu. La pression de gonflage et l'épaisseur de la gomme intérieure du pneu sont mesurées par des capteurs respectifs connus. Dans le cas où le composant à protéger est un filtre à particules (ou « FAP »), les données enregistrées sont des données de pression mesurées par un capteur de pression FAP.

Ces données relatives au composant peuvent être fournies par un estimateur d'utilisation et/ou de durée de vie du composant.

Lors de l'étape d'enregistrement E20, le calculateur enregistre des données relatives au comportement de conduite du conducteur.

Le comportement de conduite d'un conducteur peut être défini par différentes composantes correspondant à différentes actions de conduite, telles que l'utilisation de la pédale d'embrayage, la prise de virages, l'action de freinage, l'action d'accélération, l'action de décélération, les conditions de roulage définies par un régime moteur et une distance parcourue, l'utilisation de consommateurs électriques du véhicule, etc... Par exemple, dans le cas d'un système d'embrayage, les règles de conduite suivantes adaptées pour préserver ce composant peuvent être utilisées :
- limiter la durée d'enfoncement de la pédale d'embrayage (en position « débrayée » qui correspond à un taux d'enfoncement de la pédale d'embrayage supérieur à un seuil fixé) lorsque le véhicule est momentanément à l'arrêt (sans mise à l'arrêt du véhicule par le conducteur) par exemple à un feu rouge ou dans un embouteillage ;
- ne pas trop faire patiner l'embrayage lors d'une phase accélération (la position de patinage étant définie par un taux d'enfoncement de la pédale d'embrayage compris dans une plage donnée).

Dans le cas d'une batterie, une règle de conduite adaptée pour préserver ce composant est par exemple de rouler occasionnellement (par exemple selon une fréquence minimale donnée) avec un nombre limité, voire minimal, de consommateurs électriques en état de marche, afin d'améliorer le taux de recharge de la batterie.

Dans le cas d'un pneu, les règles de conduite adaptées pour protéger le pneu peuvent être de ne pas prendre un virage trop serré, prendre un virage avec une vitesse réduite et anticiper un virage en adaptant sa vitesse au préalable.

Dans le cas d'un filtre à particules, une règle de conduite adaptée pour protéger ce composant est de rouler à un régime moteur donné, par exemple d'au moins 3500 tours/minute, sur une distance minimale donnée, par exemple 3 km, afin de régénérer le filtre FAP, cette opération devant être réalisée régulièrement (c'est-à-dire selon une fréquence minimale fixée).

Les données de comportement de conduite enregistrées à l'étape E20 peuvent comprendre toutes données utiles permettant de caractériser le comportement de conduite du conducteur du véhicule, telles que la vitesse du véhicule, l'accélération ou la décélération du véhicule, un angle de braquage, une position de la boîte de vitesse, un régime moteur (nombre de tours moteur par minute), un état de fonctionnement de divers consommateurs électriques du véhicule (tels qu'un dispositif radio, un dispositif de chauffage, un dispositif de climatisation, un dispositif d'ouverture/fermeture automatique des vitres, des essuie-glaces, des feux d'éclairage, un plafonnier, etc.). Lors de cette étape d'enregistrement E20, le calculateur peut également enregistrer des données relatives à un environnement du véhicule, par exemple la température à l'extérieur du véhicule.

A partir des données enregistrées aux étapes E10 et E20, le procédé détecte à l'étape une étape E30 si un comportement de conduite est néfaste pour le composant.

L'étape de détection E30 vise en effet à détecter un comportement de conduite potentiellement néfaste pour l'un ou plusieurs des composants à protéger, c'est-à-dire susceptible de provoquer une usure prématurée de ces composants et donc à terme une panne de ces mêmes composants, à partir de l'historique des données enregistrées aux étapes E10 et E20.

La détection E30 peut comprendre l'utilisation de modèles de prédiction de d'usure prématurée des composants obtenus par une méthode d'apprentissage machine (de l'anglais « machine learning »), aussi appelée méthode d'apprentissage automatique. Les données enregistrées aux étapes E10 et E20 sont utilisées pour alimenter ces modèles de prédiction entrainés par apprentissage. Il ressort de ces modèles une information représentative d'une prédiction de la probabilité qu'une usure prématurée de ces composants survienne.

Le calculateur stocke en mémoire les modèles de prédiction d'usure des composants à protéger. Par exemple, dans le cas d'un pneu, le calculateur comprend un modèle de prédiction d'usure du pneu. Dans le cas d'un filtre à particules, le calculateur comprend un modèle de prédiction d'usure du filtre FAP. Dans le cas d'une batterie, le calculateur comprend un modèle d'usure de la batterie.

Lorsqu'un modèle de prédiction d'un des composant à protéger permet d'identifier une usure prématurée d'un de ces composants, le procédé comprend une étape E35 d'alerte au conducteur suivie d'une étape E37 de proposition d'accompagnement à la conduite ciblé sur le composant pour lequel une usure prématurée a été identifiée et visant à fournir au conducteur des informations utiles pour adapter son comportement de conduite de manière à protéger le composant concerné.

Si le conducteur souhaite faire cet apprentissage ciblé sur le composant concerné, il active le coaching proposé à l'étape E0, par son action volontaire, Vc, ce qui déclenche une étape d'apprentissage E40 durant laquelle des instructions sont données au conducteur pour modifier son comportement de conduite de manière à protéger ledit composant.

L'apprentissage vise à fournir au conducteur des informations utiles pour adapter son comportement de conduite de manière à protéger le composant concerné. Plus précisément, des instructions ou conseils techniques sont donnés au conducteur pour qu'il modifie son comportement de conduite de manière à mieux protéger le composant. Ces instructions peuvent être données par un dispositif d'interface homme-machine du véhicule, par exemple sous la forme d'une vidéo ou d'illustrations explicatives jouées sur un écran du véhicule ou encore d'instructions vocales diffusées par un dispositif audio du véhicule. Les instructions peuvent comprendre des explications permettant de comprendre le phénomène à éviter et une procédure à suivre pour éviter qu'il se produise. Les informations peuvent également comprendre une sensibilisation du conducteur au risque encouru par l'usure prématurée du composant ainsi qu'au coût d'une panne ou d'un remplacement du composant.

On va maintenant illustrer cette étape d'apprentissage E40 par des exemples concrets d'instructions données au conducteur pour la protection des composants suivants : système d'embrayage, batterie électrique, pneu et filtre FAP.

Dans le cas d'un système d'embrayage, le calculateur peut demander au conducteur d'espacer les décollages (c'est-à-dire les passages en position débrayée) notamment dans les embouteillages, de limiter la durée de patinage afin de laisser au système d'embrayage plus de temps pour refroidir, de moins appuyer sur la pédale d'accélérateur au moment de ré-embrayer, etc.

Dans le cas d'une batterie électrique, le calculateur peut avertir le conducteur qu'il faut par exemple:
- rouler de temps à autre avec moins de consommateurs électriques ou sans consommateurs électriques sur le réseau de bord ;
- réaliser une recharge lente de la batterie à l'aide d'un chargeur externe, en cas de forte décharge de celle-ci ;
- en cas d'indisponibilité de la fonction STT (« Stop & Start »), recharger manuellement la batterie (par exemple par une recharge lente à l'aide d'un chargeur externe) pour que la fonction STT soit de nouveau utilisable.

En cas de détection d'une panne de batterie lors de l'étape E10 d'enregistrement de premières données, des instructions ou conseils peuvent également être mis à la disposition et/ou proposés au conducteur au moyen de l'interface IHM du véhicule. Les conseils peuvent être:
- allumer les feux de croisement quelques secondes avant de tenter un démarrage afin de réveiller la batterie ;
- éviter de pousser le véhicule pour tenter de le démarrer, le risque encouru par cette opération étant expliqué.

Des vidéos ou illustrations peuvent également être mises à la disposition du conducteur pour expliquer comment démarrer la batterie avec des câbles, effectuer une recharge lente de la batterie avec un chargeur externe.

En cas de détection d'une usure prématurée d'un pneu ou d'un comportement de conduite inadapté pour protéger les pneus, le calculateur peut fournir au conducteur des instructions pour faire évoluer son comportement de conduite au moyen de l'interface IHM du véhicule. Par exemple, les instructions suivantes sont données au conducteur :
- prendre les virages moins serrés ;
- mieux anticiper les virages, notamment en adaptant sa vitesse progressivement avant le virage.
Des explications complémentaires peuvent également être données pour expliquer le phénomène, l'objectif de la démarche et comment mettre en œuvre les instructions. Des vidéos ou illustrations peuvent également être mises à la disposition du conducteur pour expliquer comment regonfler ou changer un pneu crevé, quelles masses maximales il convient de régler etc...

Lorsqu'il est détecté que le filtre FAP est encrassé ou que le comportement de conduite du conducteur ne permet pas une régénération du filtre FAP, le calculateur peut donner instruction au conducteur de rouler plus fréquemment dans des conditions particulières, à haut régime et sur plusieurs kilomètres (du type « à un régime moteur de 3500 tr/min pendant 3 ou 4 km »), permettant de chauffer le filtre FAP et de provoquer sa régénération. Des explications, illustrées par exemple par une vidéo, des schémas et/ou des images, peuvent être données ou mises à la disposition du conducteur via l'interface IHM du véhicule afin d'expliquer le rôle du filtre FAP (filtration des particules rejetées par la combustion moteur dans l'air évacué), les inconvénients d'un filtre FAP encrassé (baisse des performances du moteur), comment éviter un encrassement du filtre FAP (rouler de temps en temps à haut régime sur plusieurs kilomètres, utiliser une huile moteur adaptée), comment améliorer la régénération d'un filtre FAP (en ajoutant dans le carburant un additif qui permet de brûler les suies à des températures plus basses).

Dans l'exemple de réalisation qui vient d'être décrit, l'étape d'apprentissage E40 permet de donner des instructions de conduite au conducteur au moyen de l'interface IHM du véhicule. De façon alternative ou complémentaire, ces instructions de conduite pourraient être données au moyen d'une interface IHM déportée, par exemple au moyen de l'interface IHM d'un terminal de communication mobile connecté au véhicule par une liaison locale (sans fil ou physique) ou encore au moyen de l'interface IHM d'un terminal de communication connecté au véhicule par l'intermédiaire d'un réseau de communication (l'apprentissage pouvant ainsi être réalisé à l'aide d'un terminal de communication, tel qu'un ordinateur ou une tablette).

L'étape d'apprentissage E40 est suivie par une étape E45 de proposition de test, d'épreuve ou de challenge, pendant laquelle le comportement de conduite du conducteur vis-à-vis du composant concerné est observé. Si le conducteur accepte (branche « O » quittant l'étape E45), les étapes suivantes sont mises en œuvre par le calculateur :
- une étape E50 d'enregistrement d'un nouvel historique de données relatives à l'utilisation dudit composant,
- une étape E60 d'enregistrement d'un nouvel historique de données relatives à un comportement de conduite du conducteur,
Si le conducteur refuse (branche « N » quittant le bloc E45), le procédé revient à l'étape E0.

Les étapes d'enregistrement E50 et E60 sont analogues aux étapes d'enregistrement E10 et E20, à la différence près qu'elles sont réalisées postérieurement à l'étape d'apprentissage E40 et sur une fenêtre d'observation donnée. Par exemple, la fenêtre d'observation est définie par une distance déterminée à parcourir ou par une durée déterminée d'utilisation du véhicule.

Une fois les étapes d'enregistrement E50 et E60 terminées, le procédé effectue une étape E70 de vérification du comportement de conduite du conducteur, à partir des nouveaux historiques enregistrés aux étapes E50 et E60.

L'étape E70 est analogue à l'étape de détection E30 à la différence près qu'elle est réalisée postérieurement à l'étape d'apprentissage E40. Elle permet de détecter si le conducteur maintient un comportement de conduite potentiellement néfaste pour un ou plusieurs composants à protéger ou s'il a fait évoluer son comportement de conduite pour qu'il devienne conformes aux règles de conduite adaptées pour protéger les composants du véhicule. S'il est détecté que le comportement de conduite du conducteur demeure potentiellement néfaste ou dommageable pour un ou plusieurs composants à protéger (branche « N » à la sortie du bloc E70), le calculateur avertit à l'étape E80 le conducteur que son comportement de conduite demeure inadapté pour protéger le ou les composants du véhicule, au moyen de l'interface IHM du véhicule. L'étape E80 peut également renvoyer à l'étape E37 pour proposer de recommencer l'apprentissage ciblé. Si le conducteur accepte il active de nouveau le coaching proposé à l'étape E0.

Lorsqu'il est détecté à l'étape E70 que le conducteur a fait évoluer son comportement de conduite de manière à le rendre adapté pour protéger les composants du véhicule (branche « O » à la sortie du bloc E70), le procédé se termine à l'étape E90 par un message avertissant le conducteur que son comportement de conduite est désormais adapté pour protéger les composants du véhicule peut être diffusé par l'interface IHM du véhicule. A l'étape E90 également le conducteur se voit attribué une bonification tel que de préférence un score, un statut lié par exemple à un niveau d'utilisation du composant concerné. L'étape E90 peut aussi informer l'utilisateur du gain financier ou de durée de vie réalisée au regard de d'amélioration de sa manière de conduire.

L'exécution de challenges coachés permet ainsi au conducteur de diminuer l'usure des composants de son véhicule.

En variante, les étapes qui viennent d'être décrites E10-E40 et, le cas échéant, E50-E90 peuvent être mises en œuvre par un calculateur d'un terminal de communication mobile connecté au véhicule par une liaison locale (sans fil ou physique). Dans ce cas, les données enregistrées aux étapes E10, E20, E50, E60, sont transmises au terminal à travers la liaison locale.

Le procédé de l'invention est mis en œuvre pendant la conduite, en temps réel. Toutefois, l'étape d'apprentissage E40 peut être exécutée, au moins partiellement, en dehors de la conduite, notamment pour des raisons de sécurité. Il en va de même de l'étape d'avertissement E80.

Le procédé d'accompagnement à la conduite d'un conducteur de véhicule automobile qui vient d'être décrit est mis en œuvre par exécution d'une application logicielle, ou un programme d'ordinateur. L'invention concerne donc aussi un produit programme d'ordinateur comprenant des instructions de programme, ou instructions logicielles, pour commander l'exécution du procédé tel que précédemment défini.

Le programme d'ordinateur est installé et mis en œuvre dans le véhicule, par exemple dans un calculateur du véhicule. En variante, le programme d'ordinateur peut être installé dans un terminal de communication mobile connecté au véhicule.

L'invention concerne donc également :
- un véhicule automobile comportant un calculateur programmé pour commander l'exécution du procédé tel que précédemment décrit ;
- un terminal de communication mobile agencé pour se connecter à un véhicule automobile et programmé pour commander l'exécution du procédé tel que précédemment décrit.

## Revendications

1. Procédé d'accompagnement à la conduite d'un conducteur de véhicule automobile permettant de limiter l'usure de composants à protéger de ce véhicule, comprenant les étapes successives suivantes :
- une demande (Vc) d'accompagnement à la conduite pour limiter l'usure d'un des composant à protéger du véhicule,
- une étape d'apprentissage (E40) durant laquelle des instructions de conduite sont données au conducteur pour modifier son comportement de conduite de manière à protéger ledit composant lors de son utilisation,
**caractérisé en ce qu'**il comprend les étapes suivantes :
- une demande de test (E45) du comportement de conduite vis-à-vis dudit composant,
- une étape d'enregistrement (E50) d'un historique de données relatives à l'utilisation dudit composant,
- une étape d'enregistrement (E60) d'un historique de données relatives à un comportement de conduite du conducteur,
- une étape de vérification (E70) d'un comportement de conduite néfaste pour le composant à partir de ces historiques de données enregistrées,
- une étape d'attribution (E90) d'une bonification en cas de bonne utilisation dudit composant du véhicule.

2. Procédé selon la revendication 1, **caractérisé en ce que**, lors de l'étape d'apprentissage (E40), les instructions de conduite sont données au conducteur par un dispositif d'interface homme-machine du véhicule.

3. Procédé selon la revendication 1 ou la revendication 2, **caractérisé en ce que** l'étape de vérification (E70) comprend l'utilisation d'un modèle de prédiction d'usure du composant obtenu par une méthode d'apprentissage automatique.

4. Procédé selon l'une des revendications précédentes, **caractérisé en ce que** les étapes d'enregistrement (E50, E60) des données pour le test sont réalisées sur une fenêtre d'observation donnée.

5. Procédé selon la revendication précédente, **caractérisé en ce que** la fenêtre d'observation est définie par une distance déterminée à parcourir ou par une durée déterminée d'utilisation du véhicule.

6. Procédé selon l'une des revendications précédentes, **caractérisé en ce qu'**il comprend :
- une étape (E10) d'enregistrement continue de données relatives à l'utilisation des composants à protéger,
- une étape (E20) d'enregistrement continue de données relatives à un comportement de conduite du conducteur vis-à-vis des composants à protéger,
- une étape (E30) de détection d'un comportement de conduite néfaste pour un des composant à protéger à partir de ces données enregistrées,
- une étape (E35) d'avertissement du conducteur s'il est déterminé, lors de ladite étape de détection (E30), que le comportement de conduite du conducteur est néfaste pour un des composants à protéger.
- une étape (E37) de proposition d'accompagnement à la conduite pour ce composant, préalable à l'étape de demande (Vc) par le conducteur d'accompagnement à la conduite.

7. Procédé selon l'une des revendications précédentes, **caractérisé en ce qu'**il comprend une étape (E80) d'avertissement du conducteur s'il est déterminé, lors de ladite étape de vérification (E70) que le comportement de conduite du conducteur est néfaste pour le composant.

8. Procédé selon les revendications 6 et 7, **caractérisé en ce que** l'étape (E80) d'avertissement du conducteur renvoie ensuite à étape (E37) de proposition d'accompagnement à la conduite pour ce composant.

9. Procédé selon l'une des revendications précédentes, **caractérisé en ce que** lesdites étapes d'enregistrement, de vérification et d'apprentissage sont mises en œuvre par un calculateur du véhicule ou par un calculateur d'un terminal de communication mobile connecté au véhicule.

10. Procédé selon l'une des revendications précédentes, **caractérisé en ce qu'**il est mis en œuvre pour limiter l'usure d'au moins l'un des composants du groupe comportant un système d'embrayage, une batterie électrique, des pneus, un filtre à particules, un injecteur, un démarreur, un système d'amortisseurs et des plaquettes de frein.

11. Produit programme d'ordinateur comprenant des instructions de programme pour commander l'exécution du procédé selon l'une des revendications 1 à 10.

12. Terminal de communication mobile agencé pour se connecter à un véhicule automobile et programmé pour commander l'exécution du procédé selon l'une des revendications 1 à 10.

13. Véhicule automobile comportant un calculateur programmé pour commander l'exécution du procédé selon l'une des revendications 1 à 10.
